# EUROPÄISCHE PATENTSCHRIFT

(11) **EP 3 245 378 B1**
(45) Veröffentlichungstag und Bekanntmachung des Hinweises auf die Patenterteilung: **05.02.2020**
(21) Anmeldenummer: 15820024.6
(22) Anmeldetag: 29.12.2015
(51) Int. Cl.: E21B 17/042

(54) **LÖSBARE GEWINDEVERBINDUNG MIT ASYMMETRISCHER BESCHICHTUNG**
THREADED CONNECTION WITH ASYMMETRIC COATING
RACCORD FILETÉ AVEC REVÊTEMENT ASYMMÉTRIQUE

(30) Priorität: 13.01.2015 AT 162015
(43) Veröffentlichungstag der Anmeldung: 22.11.2017
(73) Patentinhaber: voestalpine Tubulars GmbH & Co KG, 8652 Kindberg-Aumühl (AT)
(72) Erfinder: SCHAFFER, Markus, 8670 Krieglach (AT); WINKLER, Peter, 8670 Krieglach (AT); LEITNER, Reinhard, 8650 Kindberg (AT); SCHALKHAMMER, Thomas, 2811 Wiesmath (AT)
(74) Vertreter: Keschmann, Marc
(86) Internationale Anmeldenummer: PCT/AT2015/000165
(87) Internationale Veröffentlichungsnummer: WO 2016/112415

(56) Entgegenhaltungen:
- DE-A1-102012 023 349
- US-A1- 2003 066 641
- US-A1- 2009 033 087
- ROBERT W SCHWARTZ ET AL: "Chemical solution deposition of electronic oxide films", COMPTES RENDUS - CHIMIE, ELSEVIER, PARIS, FR, Bd. 7, 1. Januar 2004 (2004-01-01), Seiten 433-461, XP009087280, ISSN: 1631-0748, DOI: 10.1016/J.CRCI.2004.01.007

## Beschreibung

Die Erfindung betrifft eine Schraubverbindung umfassend ein mit einem Innengewinde versehenes rohrförmiges Element und ein mit einem Außengewinde versehenes rohrförmiges Element, wobei das Außengewinde und das Innengewinde miteinander zusammenwirkende erste Kontaktflächen aufweisen und die rohrförmigen Elemente vorzugsweise dem Innen- bzw. Außengewinde benachbarte zweite Kontaktflächen aufweisen, wobei die ersten Kontaktflächen und ggf. die zweiten Kontaktflächen jeweils mit einer Beschichtung versehen sind, die wenigstens eine erste und eine zweite Schicht umfasst, wobei die erste Schicht jeweils als Konversionsschicht ausgebildet ist.

Die Erfindung betrifft weiters ein Verfahren zur Oberflächenbehandlung von Gewinden einer Gewindeverbindung von rohrförmigen Elementen umfassend das Aufbringen einer Beschichtung auf die miteinander zusammenwirkenden ersten Kontaktflächen eines Innengewindes und eines Außengewindes der Gewindeverbindung und vorzugsweise das Aufbringen einer Beschichtung auf dem Innen- bzw. Außengewinde benachbarte miteinander zusammenwirkende zweite Kontaktflächen der rohrförmigen Elemente, wobei die Beschichtung das Aufbringen wenigstens einer ersten Schicht und das Aufbringen einer zweiten Schicht auf der ersten Schicht umfasst, wobei als erste Schicht jeweils eine Konversionsschicht auf die Kontaktfläche aufgebracht wird.

Insbesondere bezieht sich die Erfindung auf Schraubverbindungen, wie sie für die Verschraubung von Stahlrohren für die Erdöl- und Erdgasförderindustrie erforderlich sind. Es ist bekannt, dass die Gewindeverbindungen für die Erdöl- und Erdgasförderindustrie durch das Verschrauben und die Nutzbelastung sehr hohen Flächenpressungen ausgesetzt sind. Viele dieser Verbindungen müssen mehrfach verschraubt und wieder gelöst werden. Rohre für die Erdöl- und Erdgasförderindustrie (gemeinhin als OCTG-Rohre - Oil Country Tubular Goods - bezeichnet) werden insbesondere als Futter- und Steigrohre zur Erschließung von Erdöl- und Erdgaslagerstätten eingesetzt.

An die Verschraubung der genannten Rohre werden hohe Anforderungen gestellt. Da die Gewinde auf Grund des hohen Anpressdrucks der miteinander zusammenwirkenden Gewindeflächen zum Fressen neigen, müssen Vorkehrungen getroffen werden, um ein Fressen und allgemein eine gegenseitige Beschädigung zu vermeiden. Weiters muss eine ausreichende Korrosionsbeständigkeit gegeben sein. Einschlägige Normen geben außerdem vor, dass die Gewindeverbindung zum mehrmaligen (bis zu 10 Mal) Verschrauben und Lösen der Verschraubung geeignet sein soll. Andere Normen im Bereich der Erdölbohrrohre fordern sogar eine 100 malige Wiederverschraubbarkeit.

Im einfachsten Fall versucht man durch Auftragen von Gewindepaste die Beschädigung der Gewinde zu vermeiden. Allerdings ist die Notwendigkeit des Einfettens möglichst zu vermeiden, da der hierdurch verursachte Aufwand groß ist, insbesondere wenn im Zuge von mehrmaligen Verschraubungen ein Nachfetten erforderlich wird.

Außerdem ist es bekannt, den Werkstoff der Gewindeflächen oberflächlich chemisch umzuwandeln oder ein fremdes Material aufzutragen, wodurch eine Konversionsschicht erhalten wird. Konversionsschichten werden in der Regel durch die chemische Reaktion einer wässrigen Behandlungslösung mit dem metallischen Untergrund erzeugt und bilden eine sehr gute Grundlage zur Anhaftung nachfolgender Beschichtungen und steigern signifikant die Korrosionsbeständigkeit des Grundmaterials im Vergleich zu unbehandelten Werkstoffoberflächen. Hierzu zählt das Phosphatieren der Gewindeflächen. Im Stand der Technik ist weiters die Oberflächenbeschichtung der Gewindeflächen mit den verschiedensten Stoffen beschrieben, welche die Verschraubungseigenschaften verbessern sollen. Ein Beispiel für derartige Beschichtungen zeigt US-A1-2009/033087.

Die bekannten Beschichtungen sind jedoch unzureichend, um sämtlichen Anforderungen in ausreichendem Maße gerecht zu werden.

Die vorliegende Erfindung zielt daher darauf ab, eine Gewindeverbindung dahingehend zu verbessern, dass das Einfetten der Gewindeverbindung (insbesondere der Gewindegänge, des metallischen Dichtsitzes und der Schulterfläche) von Rohren auch beim mehrmaligen Verbinden der Rohrstücke vermieden werden kann. Die Fressneigung soll deutlich vermindert werden. Weiters soll die Anzahl der Mehrfachverschraubungen bei etwa gleichbleibendem Drehmomentverhalten für das Verschrauben und das Lösen erhöht werden, wobei die Dichtheit der Verschraubung sicher gestellt sein muss.

Zur Lösung dieser Aufgabe besteht die Erfindung bei einer Gewindeverbindung der eingangs genannten Art im Wesentlichen darin, dass eine der miteinander zusammenwirkenden ersten und ggf. zweiten Kontaktflächen als zweite Schicht eine Schicht aus einem keramischen Material mit reibungsminderndem Effekt und die andere der miteinander zusammenwirkenden Kontaktflächen als zweite Schicht eine Lackschicht mit einem Bindemittel aus einem organischen Polymer trägt, in der feste Schmierstoffpartikel verteilt sind. Die beiden miteinander zusammenwirkenden Kontaktflächen tragen somit insgesamt jeweils mindestens zwei Schichten, wobei die im Rahmen der Erfindung als "zweite Schicht" bezeichnete Schicht bevorzugt jeweils die äußerste Schicht ist, an der das Außen- und das Innengewinde einander kontaktieren. Die zweite Schicht des Innengewindes ist aus einem anderen Material gebildet als die zweite Schicht des Außengewindes, nämlich aus einem keramischen Material mit reibungsminderndem Effekt einerseits und einem Lack mit einem Bindemittel aus einem organischen Polymer andererseits, wobei das Material jeweils so gewählt ist, dass sich die zweiten Schichten chemisch nicht miteinander verbinden, d.h. keine chemische Verbindung miteinander eingehen. Dadurch kann die Fressneigung drastisch gesenkt und die mehrmalige Lösbarkeit der Verbindung erreicht werden.

Bevorzugt ist vorgesehen, dass die zweite Schicht aus keramischem Material an dem mit dem Innengewinde versehenen rohrförmigen Element und die als Lackschicht ausgeführte zweite Schicht an dem mit dem Außengewinde versehenen rohrförmigen Element ausgebildet ist.

Die zweite Schicht aus dem keramischen Material erhöht den Korrosionsschutz an lackfreien Gewindeoberflächen deutlich. Weiters hat diese Schicht in Kombination mit der ersten Schicht, insbesondere wenn diese gemäß einer bevorzugten Ausbildung als Manganphosphatschicht ausgebildet ist, eine besonders reibungsmindernde Wirkung.

Bevorzugt ist die erste Schicht als Phosphatschicht ausgebildet ist, wobei sie bevorzugt aus Manganphosphat, Eisenphosphat und/oder Zinkphosphat unter Zusatz von allenfalls Nickelsalzen, besonders bevorzugt aus Manganphosphat und Zinkphosphat und insbesondere bevorzugt aus Manganphosphat besteht.

An der Kontaktfläche zwischen der aus keramischem Material bestehenden reibungsmindernden Schicht und der mit festen Schmierstoffpartikeln versehenen Lackschicht wird erfindungsgemäß eine sehr geringe Gleitreibung erzielt ohne dass ein Einfetten erforderlich ist. Die niedrige Gleitreibung wird hierbei über lange Zeit aufrechterhalten und ist insbesondere auch nach mehrmaligen Verschraubungen ohne wesentliche Verschlechterung der Gleiteigenschaften gewährleistet.

Bevorzugt ist vorgesehen, dass die Schichtdicke der Lackschicht und der Anteil an Schmiermittel derart gewählt ist, dass diese bei Erdölförderrohren ohne Kaltverschweißung des Materials zumindest mehr als 10 mal und bei Erdölbohrrohren bevorzugt sogar mehr als 100 mal verschraubt und entschraubt werden können, ohne die Schmierwirkung der Lackschicht zu zerstören.

Damit die Gewindegeometrie der beschichteten Gewinde im Vergleich zur unbeschichteten Ausführung unverändert bleibt, ist man bestrebt die Dicke der aufgebrachten Schichten möglichst gering zu halten. Eine bevorzugte Ausbildung sieht in diesem Zusammenhang vor, dass die Dicke der Beschichtung der miteinander zusammenwirkenden ersten Kontaktflächen weniger als 120 µm, bevorzugt weniger als 70 µm beträgt.

Die keramische Schicht kann im Rahmen der Erfindung besonders dünn ausgebildet sein ohne ihre reibungsvermindernde und korrosionsschützende Eigenschaft zu beeinträchtigen. Insbesondere kann diese Schicht als Nanobeschichtung ausgebildet sein, wobei bevorzugt vorgesehen ist, dass die Schichtdicke der keramischen Schicht weniger als 1 µm, vorzugsweise weniger als 200 nm, insbesondere 10-100 nm beträgt.

Ein solch dünner Auftrag gelingt vorzugsweise dadurch, dass die keramische Schicht aus einem nasschemischen, selbstabscheidenden Präzipitat oder aus einem lacktechnisch aufgebrachten Keramikpräpolymer mit organischen Anteilen besteht.

Bevorzugt ist vorgesehen, dass die keramische Schicht ein Harz, wie z.B. Melaminharz, oder Hydrophobisierungsmittel enthält, insbesondere mit diesem imprägniert ist, um die Korrosionsfestigkeit zu erhöhen.

Das Harz oder Hydrophobisierungsmittel zur Imprägnierung der Nanoschichten dient dem temporären Korrosionsschutz, verdichtet aber auch die poröse Nanoschicht langfristig und erhöht ihre Duktilität (somit werden die spröden Eigenschaften der Keramik gezielt reduziert).

Um das Eindringen von Wasser zu vermeiden, können diverse Harze und technisch bekannte Hydrophobisierungsmittel aufgebracht werden. Als Harz können alle Harze mit ausreichender Stabilität dienen z.B. technisch gut charakterisierte Melaminharze oder Siloxane (z.B. auf PDMS-Basis). Diese müssen oft eingebrannt werden, um eine ausreichende Stabilität zu erhalten. Als Hydrophobisierungsmittel sind Alkoxysilane mit hydrophoben Seitengruppen oder deren Oligo- und Polymere bekannt, z.B. Dynasilane der Typen F8815 oder F8261.

Die keramische Schicht umfasst vorzugweise Oxide von Titan, Zirkon, Niob, Tantal, Molybdän, Chrom, Silizium und/oder Germanium. Insbesondere besteht die keramische Schicht aus einem Oxid ausgewählt aus der Gruppe bestehend aus Oxiden von Titan, Zirkon, Niob, Tantal, Molybdän, Chrom, Silizium, Vanadium, Wolfram und Germanium und deren Gemischen. Besonders bevorzugt besteht die keramische Schicht aus Siliziumoxid, nämlich Quarz.

Wie bereits erwähnt ist die erste Schicht bevorzugt eine durch Phosphatierung der Kontaktfläche erzeugte Schicht. Insbesondere handelt es sich hierbei um eine Manganphosphatschicht, wobei sowohl die am Außengewinde ausgebildete erste Schicht als auch die am Innengewinde ausgebildete erste Schicht durch Phosphatierung erzeugt, insbesondere als Manganphosphatschichten ausgebildet sind. Die Manganphosphatschicht wird vorzugsweise in einem heißen Badprozess erzeugt und kann alternativ galvanisch abgeschieden werden.

Die Lackschicht dient einerseits der Erhöhung des Korrosionsschutzes und andererseits als Träger für die darin verteilten festen Schmierstoffpartikel. Die Schichtdicke der Lackschicht beträgt im Bereich der ersten Kontaktflächen bevorzugt 5-80 µm, besonders bevorzugt 10-40 µm, um die Gewindegeometrie nicht zu beeinträchtigen.

Die erfindungsgemäße Beschichtung kann zusätzlich auch auf den dem Gewinde benachbarten, zweiten Kontaktflächen der beiden rohrförmigen Elemente aufgebracht sein. Dabei handelt es sich vorzugsweise um zur Ausbildung eines Dichtsitzes miteinander zusammenwirkende Dichtflächen und ggf. um miteinander zusammenwirkende Schulterflächen, wobei die Dichtflächen bevorzugt konisch ausgebildet sind und bevorzugt in Einschraubrichtung an das Innen- bzw. Außengewinde anschließend angeordnet sind. Die Dicke der Beschichtung, insbesondere der Lackschicht kann an den zweiten Dichtflächen größer gewählt sein als auf den Gewindeflächen, d.h. den ersten Kontaktflächen. Eine bevorzugte Ausbildung sieht hierbei vor, dass die Schichtdicke der Lackschicht im Bereich der zweiten Kontaktflächen 10-500 pm, bevorzugt 40-300 µm beträgt. Insbesondere kann vorgesehen sein, dass die Schichtdicke der Lackschicht im Bereich der Dichtflächen 10-300 µm, bevorzugt 40-150 µm beträgt. Im Bereich der Schulterflächen kann die Schichtdicke der Lackschicht 50-500 pm, bevorzugt 150-300 µm betragen.

Hinsichtlich der Ausbildung der Gesamtschichtdicke sind folgende Ausführungsformen bevorzugt. Die Dicke der Beschichtung der miteinander zusammenwirkenden zweiten Kontaktflächen im Bereich der Dichtflächen kann weniger als 340 µm, bevorzugt weniger als 180 µm betragen. Die Dicke der Beschichtung der miteinander zusammenwirkenden zweiten Kontaktflächen im Bereich der Schulterflächen kann weniger als 540 µm, bevorzugt weniger als 330 µm betragen.

Gemäß einer bevorzugten Weiterbildung der Erfindung ist das organische Polymer des Bindemittels der Lackschicht ein vernetzend-aushärtendes Polymer. Insbesondere besteht die Lackschicht aus einem Einbrennlack mit einem Kunstharz-Bindemittel oder umfasst als Bindemittel ein Zweikomponentensystem aus einem Kunstharz und einem Härter. Das Kunstharz ist bevorzugt ein Alkydharz, insbesondere ein epoxiharzmodifiziertes Alkydharz. Zum Beispiel kann ein SW Lack SILVATHERM 2312-3009-90 mit eingemischtem Wachs (Polypropylenwachs) eingesetzt werden.

Die festen Schmierstoffpartikel sind bevorzugt polymerbasiert, insbesondere bestehen sie aus einem synthetischen Wachs, bevorzugt Polyolefin- oder Polyamid- oder Fluoropolymer-, insbesondere Polypropylenwachs. Der Anteil der festen Schmierstoffpartikel in der Lackschicht kann 1-50 Gew.-%, bevorzugt 1-20 Gew.-%, bevorzugter 1-10 Gew.-%, insbesondere 5 Gew.-% betragen. Eine solche Menge von Wachspartikeln setzt die Gleitreibung deutlich herab und erhöht das langzeitstabile Gleitverhalten.

Bevorzugt ist vorgesehen, dass die erste und die zweite Schicht aus keramischem Material zusammen als Konversionsschicht, bevorzugt erzeugt über Phosphatierung, ausgebildet sind.

Weiters ist bevorzugt vorgesehen, dass die Schmierstoffpartikel aus nicht kristallinen Fluorkohlenwasserstoffen bzw. nicht hochpolymeren, gegebenenfalls derivatisierten Kohlenwasserstoffen oder Silikonen bestehen.

Bevorzugt ist vorgesehen, dass für den Einsatz bei Temperaturen unter dem Gefrierpunkt die Lackschicht geringer vernetzt ist.

Gemäß einem weiteren Aspekt der Erfindung wird bei einem Verfahren der eingangs genannten Art so vorgegangen, dass auf eine der miteinander zusammenwirkenden Kontaktflächen als zweite Schicht eine Schicht aus einem keramischen Material mit reibungsminderndem Effekt und auf die andere der miteinander zusammenwirkenden Kontaktflächen als zweite Schicht eine Lackschicht mit einem Bindemittel aus einem organischen Polymer aufgebracht wird, in der feste Schmierstoffpartikel verteilt sind.

Eine bevorzugte Verfahrensweise sieht vor, dass die Schicht aus keramischem Material als zweite Schicht auf die Kontaktfläche des Innengewindes und die Lackschicht als zweite Schicht auf die Kontaktfläche des Außengewindes aufgebracht wird.

Eine weitere bevorzugte Verfahrensweise sieht vor, dass die keramische Schicht mit einer Schichtdicke von weniger als 1 µm, vorzugsweise weniger als 200 nm, insbesondere 10-100 nm aufgetragen wird. Insbesondere kann die keramische Schicht mit Vorteil durch nasschemische Ausfällung von Nanopartikeln, insbesondere SiO₂-Nanopartikeln aus einer Lösung erzeugt werden. Die Lösung kann hierbei aus Ethyldiglykol oder Reaktionsethanol, Ammoniak und Tetraethylorthosilicat (TEOS) und Wasser bestehen.

Dazu kann das rohrförmige Element mit im Wesentlichen senkrechter Rohrachse mit seinem Gewinde in ein Bad der Lösung getaucht werden, wobei bevorzugt das Niveau des Bads durch Anordnen eines Verdrängungskörpers im Inneren des rohrförmigen Elements erhöht wird. Alternativ kann so vorgegangen werden, dass das rohrförmige Element mit im Wesentlichen waagrechter Rohrachse mit einem umfangsmäßigen Abschnitt in ein Bad der Lösung getaucht und um die Rohrachse rotiert wird.

Die Lackschicht kann bevorzugt durch Sprühen aufgebracht werden. Der Lack wird vorteilhaft mittels Sprühpistole aufgebracht und danach bei 130-180°C für 7-20 min ausgehärtet. Versuche haben gezeigt, dass Lackschichten unter 5 µm zu frühzeitigem Verreiben neigen, Lackschichten über 80 µm zeigen Momentanomalien bei Verschraubung. Günstige Lackschichtdicken, insbesondere solche für den Bereich der ersten Kontaktflächen, betragen 10-40 µm.

Das mit einem Innengewinde versehene rohrförmige Element und das ein mit einem Außengewinde versehene rohrförmige Element können bspw. zwei Rohre oder ein Rohr und eine Muffe sein.

Die Erfindung wird nachfolgend anhand eines in der Zeichnung schematisch dargestellten Ausführungsbeispiels näher erläutert. In dieser zeigen Fig. 1 die einzelnen Beschichtungen des Innen- und des Außengewindes, Fig. 2 und 3 den Verlauf des beim Ver- und Entschrauben der Gewindeverbindung gemessenen Drehmoments als Funktion der Umdrehungen und Fig. 4 einen Schnitt einer Schraubverbindung im zusammengeschraubten Zustand.

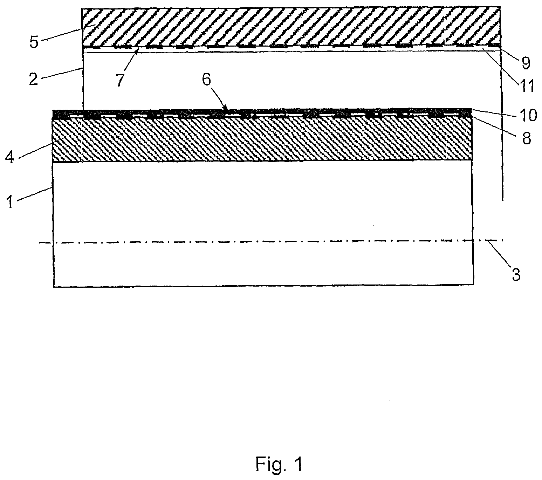

In Fig. 1 ist ein mit einem Außengewinde 6 versehener Rohrabschnitt 1 und ein als Muffe mit einem Innengewinde 7 versehener Rohrabschnitt 2 dargestellt. Der Rohrabschnitt 1 weist eine Rohrachse 3 auf, wobei die Wand mit 4 bezeichnet ist. Die Wand des Rohrabschnitts 2 ist mit 5 bezeichnet. Das Außengewinde 6 und das Innengewinde 7 sind mit miteinander zusammenwirkenden Kontaktflächen ausgebildet, sodass der Rohrabschnitt 1 in den als Muffe ausgebildeten Rohrabschnitt 2 eingeschraubt werden kann, um eine Gewindeverbindung zwischen den beiden Rohrabschnitten herzustellen.

Auf der Kontaktfläche des Außengewindes 6 und der Kontaktfläche des Innengewindes 7 ist jeweils unmittelbar eine erste Schicht 8 bzw. 9 aufgebracht, die jeweils eine Manganphosphatschicht ist. Die Manganphosphatbeschichtungen 8 und 9 weisen eine Dicke von 5 bis 20 µm, bevorzugt 10-15 µm auf.

Auf der Manganphosphatschicht 8 des Rohrabschnitts 1 ist eine Lackschicht 10 angeordnet, in welche Wachspartikel dispergiert sind. Die Lackschicht 10 ist bevorzugt mit einem Lack mit der Markenbezeichnung SILVATHERM 2312-3009-90 verwirklicht. Dabei handelt es sich um einen Einbrennlack auf Basis eines epoxidharzmodifizierten Alkydharzes. Bei den Wachspartikeln handelt es sich vorzugsweise um Partikel aus Polypropylenwachs, wobei ein Partikeldurchmesser von kleiner als 20 µm, insbesondere von 2-10 µm bevorzugt ist. Der Lack wird auf den metallischen Dichtsitz, die Schulterflächen und dem Außengewinde 10 aufgebracht und danach bei 130-180°C für ca. 7-20 min in einer Temperaturkammer ausgehärtet. Die Lackschicht weist eine Dicke von 5-80 µm, insbesondere 10-40 µm auf. Ein Einbrennlack auf Basis eines epoxidharzmodifizierten Alkydharzes zeigt auch bei tiefen Temperaturen von bis zu -40°C keine signifikante Verschlechterung der tribologischen Eigenschaften.

Auf der Manganphosphatschicht 9 des Rohrabschnitts 2 ist eine Nanoquarzschicht 11 mit einer Schichtdicke von < 1 µm angeordnet.

Versuche mit einer solchen Materialpaarung an den Kontaktflächen der Gewindeverbindung haben ergeben, dass eine konstante Reibzahl von ca. 0,06 über eine Prüfdauer von 400 Zyklen gegeben war.

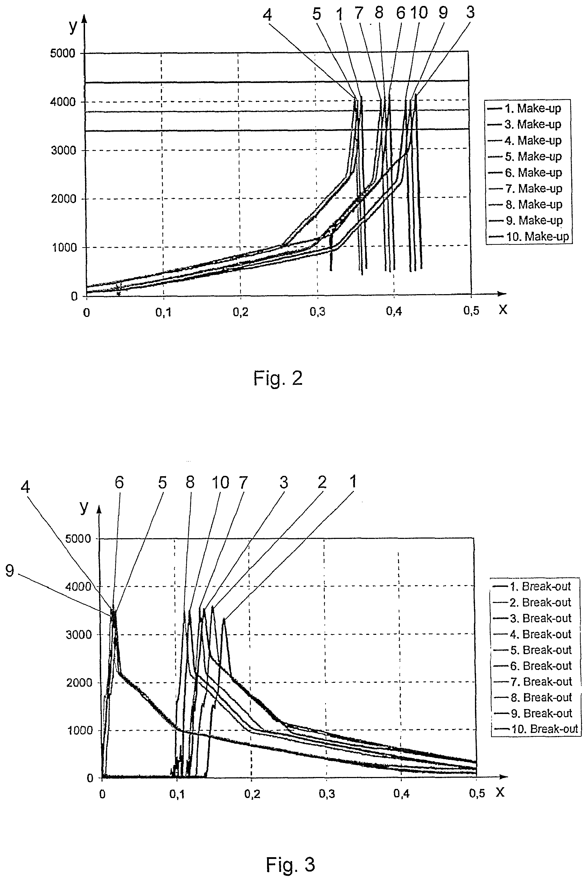

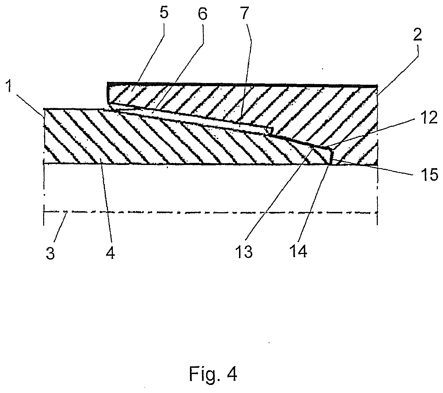

In Fig. 2 und 3 sind Messungen des Drehmomentverlaufs beim Verschrauben (Fig. 2) und Entschrauben (Fig. 3) der Gewindeverbindung gemäß Fig. 4 in Abhängigkeit von den Umdrehungen dargestellt. Auf der x-Achse sind jeweils die Umdrehungen dargestellt, auf der y-Achse das Drehmoment in Nm. Es sind die Messungen von zehn aufeinanderfolgenden Verschraubungs- bzw. Entschraubungsvorgängen eingezeichnet, wobei die Messwerte entsprechend der Reihenfolge der Verschraubungs- bzw. Entschraubungsvorgänge mit 1 bis 10 nummeriert sind.

Es ist ersichtlich, dass ohne Zusatzschmierung ein konstanter Drehmomentverlauf auch bei 10 aufeinanderfolgenden Verschraubungen gegeben ist.

In Fig. 4 ist eine Ausführungsform der Erfindung dargestellt, wobei die beiden Rohrabschnitte 1 und 2 in miteinander verschraubtem Zustand dargestellt sind. Das Außengewinde 6 und das Innengewinde 7 sind konisch ausgebildet und weisen zusammenwirkende erste Kontaktflächen auf. Im Anschluss an das Außen- und Innengewinde 6,7 weisen die Rohrabschnitte 1,2 jeweils miteinander zusammenwirkende zweite Kontaktflächen auf, nämlich flächig aneinander liegende zusammenwirkende Dichtflächen 12 und 13 sowie flächig aneinander liegende zusammenwirkende Schulterflächen 14 und 15. Die Dichtflächen 12,13 sind bevorzugt konisch ausgebildet. Die Schulterflächen 14,15 verlaufen zumeist geneigt zur Achse 3, sodass die beiden Rohrabschnitte 1 und 2 beim Festziehen der Schraubverbindung an den Schulterflächen 14,15, aber auch an den Dichtflächen 12,13 aneinandergepresst werden.

## Patentansprüche

1. Schraubverbindung umfassend ein mit einem Innengewinde versehenes rohrförmiges Element und ein mit einem Außengewinde versehenes rohrförmiges Element, wobei das Außengewinde und das Innengewinde miteinander zusammenwirkende erste Kontaktflächen aufweisen und die rohrförmigen Elemente vorzugsweise dem Innen- bzw. Außengewinde benachbarte zweite Kontaktflächen aufweisen, wobei die ersten Kontaktflächen und ggf. die zweiten Kontaktflächen jeweils mit einer Beschichtung versehen sind, die wenigstens eine erste und eine zweite Schicht umfasst, wobei die erste Schicht jeweils als Konversionsschicht ausgebildet ist, **dadurch gekennzeichnet, dass** eine der miteinander zusammenwirkenden ersten und ggf. zweiten Kontaktflächen als zweite Schicht eine Schicht (11) aus einem keramischen Material mit reibungsminderndem Effekt und die andere der miteinander zusammenwirkenden Kontaktflächen als zweite Schicht eine Lackschicht (10) mit einem Bindemittel aus einem organischen Polymer trägt, in der feste Schmierstoffpartikel verteilt sind.

2. Schraubverbindung nach Anspruch 1, **dadurch gekennzeichnet, dass** die zweite Schicht aus keramischem Material (11) an dem mit dem Innengewinde (7) versehenen rohrförmigen Element (2) ausgebildet ist und die als Lackschicht (10) ausgeführte zweite Schicht an dem mit dem Außengewinde (6) versehenen rohrförmigen Element (1) ausgebildet ist.

3. Schraubverbindung nach Anspruch 1 oder 2, **dadurch gekennzeichnet, dass** die Schichtdicke der keramischen Schicht (11) weniger als 1 µm, vorzugsweise weniger als 200 nm, insbesondere 10-100 nm beträgt.

4. Schraubverbindung nach Anspruch 1, 2 oder 3, **dadurch gekennzeichnet, dass** die keramische Schicht (11) ein Harz, wie z.B. Melaminharz, oder Hydrophobisierungsmittel enthält, insbesondere mit diesem imprägniert ist, um die Korrosionsfestigkeit zu erhöhen.

5. Schraubverbindung nach einem der Ansprüche 1 bis 4, **dadurch gekennzeichnet, dass** die keramische Schicht (11) Oxide von Titan, Zirkon, Niob, Tantal, Molybdän, Chrom, Silizium, Vanadium, Wolfram, Germanium und/oder und deren Gemische umfasst.

6. Schraubverbindung nach einem der Ansprüche 1 bis 5, **dadurch gekennzeichnet, dass** die keramische Schicht (11) aus einem nasschemischen, selbstabscheidenden Präzipitat oder aus einem lacktechnisch aufgebrachten Keramikpräpolymer mit organischen Anteilen besteht.

7. Schraubverbindung nach einem der Ansprüche 1 bis 6, **dadurch gekennzeichnet, dass** die erste Schicht (8,9) als Phosphatschicht ausgebildet ist, wobei sie bevorzugt aus Manganphosphat, Eisenphosphat und/oder Zinkphosphat unter Zusatz von allenfalls Nickelsalzen, besonders bevorzugt aus Manganphosphat und Zinkphosphat und insbesondere bevorzugt aus Manganphosphat besteht.

8. Schraubverbindung nach einem der Ansprüche 1 bis 7, **dadurch gekennzeichnet, dass** die zweiten Kontaktflächen zur Ausbildung eines Dichtsitzes miteinander zusammenwirkende Dichtflächen (12,13) und weiters miteinander zusammenwirkende Schulterflächen (14,15) umfassen, wobei die Dichtflächen (12,13) bevorzugt konisch ausgebildet sind und bevorzugt in Einschraubrichtung an das Innen- bzw. Außengewinde (7,6) anschließend angeordnet sind.

9. Schraubverbindung nach einem der Ansprüche 1 bis 8, **dadurch gekennzeichnet, dass** die Schichtdicke der Lackschicht (10) im Bereich der ersten Kontaktflächen 5-80 µm, bevorzugt 10-40 µm beträgt.

10. Schraubverbindung nach einem der Ansprüche 1 bis 9, **dadurch gekennzeichnet, dass** die Schichtdicke der Lackschicht (10) im Bereich der zweiten Kontaktflächen 10-500 µm, bevorzugt 40-300 µm beträgt.

11. Schraubverbindung nach einem der Ansprüche 1 bis 10, **dadurch gekennzeichnet, dass** die Schichtdicke der Lackschicht (10) im Bereich der ersten Kontaktflächen geringer gewählt ist als im Bereich der zweiten Kontaktflächen.

12. Schraubverbindung nach einem der Ansprüche 8 bis 11, **dadurch gekennzeichnet, dass** die Schichtdicke der Lackschicht (10) im Bereich der Dichtflächen (12,13) 10-300 µm, bevorzugt 40-150 µm beträgt.

13. Schraubverbindung nach einem der Ansprüche 8 bis 12, **dadurch gekennzeichnet, dass** die Schichtdicke der Lackschicht (10) im Bereich der Schulterflächen (14,15) 50-500 µm, bevorzugt 150-300 µm beträgt.

14. Schraubverbindung nach einem der Ansprüche 1 bis 13, **dadurch gekennzeichnet, dass** das organische Polymer des Bindemittels der Lackschicht ein vernetzend-aushärtendes Polymer ist.

15. Schraubverbindung nach einem der Ansprüche 1 bis 14, **dadurch gekennzeichnet, dass** die Lackschicht (10) aus einem Einbrennlack mit einem Kunstharz-Bindemittel besteht oder als Bindemittel ein Zweikomponentensystem aus einem Kunstharz und einem Härter umfasst.

16. Schraubverbindung nach Anspruch 15, **dadurch gekennzeichnet, dass** das Kunstharz ein Alkydharz, insbesondere ein epoxiharzmodifiziertes Alkydharz ist.

17. Schraubverbindung nach einem der Ansprüche 1 bis 16, **dadurch gekennzeichnet, dass** die festen Schmierstoffpartikel polymerbasiert sind, insbesondere aus einem synthetischen Wachs, bevorzugt Polyolefin-, oder Polyamid- oder Fluoropolymer, insbesondere Polypropylenwachs bestehen.

18. Schraubverbindung nach einem der Ansprüche 1 bis 17, **dadurch gekennzeichnet, dass** der Anteil der festen Schmierstoffpartikel in der Lackschicht (10) 1-50 Gew.-%, bevorzugt 1-20 Gew.-%, bevorzugter 1-10 Gew.-%, insbesondere 5 Gew.-% beträgt.

19. Schraubverbindung nach einem der Ansprüche 1 bis 18, **dadurch gekennzeichnet, dass** die Dicke der Beschichtung der miteinander zusammenwirkenden ersten Kontaktflächen weniger als 120 µm, bevorzugt weniger als 70 µm beträgt.

20. Schraubverbindung nach einem der Ansprüche 8 bis 19, **dadurch gekennzeichnet, dass** die Dicke der Beschichtung der miteinander zusammenwirkenden zweiten Kontaktflächen im Bereich der Dichtflächen (12,13) weniger als 340 µm, bevorzugt weniger als 180 µm beträgt.

21. Schraubverbindung nach einem der Ansprüche 8 bis 20, **dadurch gekennzeichnet, dass** die Dicke der Beschichtung der miteinander zusammenwirkenden zweiten Kontaktflächen im Bereich der Schulterflächen (14,15) weniger als 540 µm, bevorzugt weniger als 330 µm beträgt.

22. Schraubverbindung nach einem der Ansprüche 1 bis 21, **dadurch gekennzeichnet, dass** die erste und die zweite Schicht aus keramischem Material zusammen als Konversionsschicht, bevorzugt erzeugt über Phosphatierung, ausgebildet sind.

23. Schraubverbindung nach einem der Ansprüche 1 bis 22, **dadurch gekennzeichnet, dass** die Schmierstoffpartikel aus nicht kristallinen Fluorkohlenwasserstoffen bzw. nicht hochpolymeren, gegebenenfalls derivatisierten Kohlenwasserstoffen oder Silikonen bestehen.

24. Verfahren zur Oberflächenbehandlung von Gewinden einer Gewindeverbindung von rohrförmigen Elementen umfassend das Aufbringen einer Beschichtung auf die miteinander zusammenwirkenden ersten Kontaktflächen eines Innengewindes und eines Außengewindes der Gewindeverbindung und vorzugsweise das Aufbringen einer Beschichtung auf dem Innen- bzw. Außengewinde benachbarte, miteinander zusammenwirkende zweite Kontaktflächen der rohrförmigen Elemente, wobei die Beschichtung das Aufbringen wenigstens einer ersten Schicht und das Aufbringen einer zweiten Schicht auf der ersten Schicht umfasst, wobei als erste Schicht jeweils eine Konversionsschicht auf die Kontaktfläche aufgebracht wird, **dadurch gekennzeichnet, dass** auf eine der miteinander zusammenwirkenden ersten und ggf. zweiten Kontaktflächen als zweite Schicht eine Schicht (11) aus einem keramischen Material mit reibungsminderndem Effekt und auf die andere der miteinander zusammenwirkenden Kontaktflächen als zweite Schicht eine Lackschicht (10) mit einem Bindemittel aus einem organischen Polymer aufgebracht wird, in der feste Schmierstoffpartikel verteilt sind.

25. Verfahren nach Anspruch 24, **dadurch gekennzeichnet, dass** die Schicht (11) aus keramischem Material als zweite Schicht auf die Kontaktfläche des Innengewindes (7) und die Lackschicht (10) als zweite Schicht auf die Kontaktfläche des Außengewindes (6) aufgebracht wird.

26. Verfahren nach Anspruch 24 oder 25, **dadurch gekennzeichnet, dass** die keramische Schicht (11) mit einer Schichtdicke von weniger als 1 µm, vorzugsweise weniger als 200 nm, insbesondere 10-100 nm aufgetragen wird.

27. Verfahren nach Anspruch 24, 25 oder 26, **dadurch gekennzeichnet, dass** die keramische Schicht (11) durch nasschemische Ausfällung von Nanopartikeln, insbesondere SiO₂-Nanopartikeln aus einer Lösung erzeugt wird.

28. Verfahren nach Anspruch 27, **dadurch gekennzeichnet, dass** das rohrförmige Element (2) mit im Wesentlichen senkrechter Rohrachse mit seinem Gewinde (7) in ein Bad der Lösung getaucht wird, wobei bevorzugt das Niveau des Bads durch Anordnen eines Verdrängungskörpers im Inneren des rohrförmigen Elements erhöht wird.

29. Verfahren nach Anspruch 27, **dadurch gekennzeichnet, dass** das rohrförmige Element (2) mit im Wesentlichen waagrechter Rohrachse mit einem umfangsmäßigen Abschnitt in ein Bad der Lösung getaucht und um die Rohrachse rotiert wird.

30. Verfahren nach einem der Ansprüche 24 bis 29, **dadurch gekennzeichnet, dass** die Lackschicht (10) im Bereich der ersten Kontaktflächen mit einer Schichtdicke von 5-80 µm, bevorzugt 10-40 µm aufgetragen wird.

31. Verfahren nach einem der Ansprüche 24 bis 30, **dadurch gekennzeichnet, dass** die Lackschicht (10) durch Sprühen aufgebracht wird.

## Claims

1. A screw joint comprising a tubular element having a female thread and a tubular element having a male thread, wherein said male thread and said female thread have first contact surfaces that cooperate with each other, and the tubular elements preferably have second contact surfaces adjacent to said female thread and/or said male thread, wherein said first contact surfaces and, if applicable, said second contact surfaces each have a coating which has at least a first and a second layer, wherein said first layer is formed as a conversion layer in each case, **characterised in that** one of said first and, if applicable, second contact surfaces that cooperate with each other has a layer (11) made of ceramic material with a friction reducing effect as a second layer and the other of the two contact surfaces that cooperate with each other has a varnish layer (10) with a binding agent made of an organic polymer, throughout which solid lubricant particles are distributed, as a second layer.

2. The screw joint according to claim 1, **characterised in that** said second layer made of a ceramic material (11) is formed on said tubular element (2) with said female thread (7) and said second layer consisting of a varnish layer (10) is formed on said tubular element (1) with said male thread (6).

3. The screw joint according to claim 1 or 2, **characterised in that** said layer thickness of said ceramic layer (11) is less than 1 µm, preferably less than 200 nm, particularly between 10 and 100 nm.

4. The screw joint according to claim 1, 2 or 3, **characterised in that** said ceramic layer (11) includes a resin, such as melamine resin, or a hydrophobing agent, in particular is waterproofed with it, in order to increase corrosion resistance.

5. The screw joint according to one of claims 1 to 4, **characterised in that** said ceramic layer (11) comprises titanium, zirconium, niobium, tantalum, molybdenum, chromium, silicon, vanadium, tungsten, germanium oxides and/or combinations thereof.

6. The screw joint according to one of claims 1 to 5, **characterised in that** said ceramic layer (11) consists of a wet chemical, self-depositing precipitate or a ceramic prepolymer with organic components applied by means of coating.

7. The screw joint according to one of claims 1 to 6, **characterised in that** said first layer (8, 9) is formed as a phosphate layer, wherein it preferably consists of manganese phosphate, iron phosphate and/or zinc phosphate with the addition of nickel salts, if necessary, particularly preferably of manganese phosphate and zinc phosphate and more particularly preferably of manganese phosphate.

8. The screw joint according to one of claims 1 to 7, **characterised in that** said second contact surfaces comprise sealing surfaces (12, 13) that cooperate with each other to form a sealing seat and further comprise shoulder surfaces (14, 15) that cooperate with each other, wherein said sealing surfaces (12, 13) are preferably conical and are preferably arranged in screw-in direction adjoining to said female and male thread (7, 6) respectively.

9. The screw joint according to one of claims 1 to 8, **characterised in that** said layer thickness of said varnish layer (10) is between 5 and 80 µm, preferably between 10 and 40 µm, in the area of said first contact surfaces.

10. The screw joint according to one of claims 1 to 9, **characterised in that** said layer thickness of said varnish layer (10) is between 10 and 500 µm, preferably between 40 and 300 µm, in the area of said second contact surfaces.

11. The screw joint according to one of claims 1 to 10, **characterised in that** said layer thickness of said varnish layer (10) is smaller in the area of said first contact surfaces than in the area of said second contact surfaces.

12. The screw joint according to one of claims 8 to 11, **characterised in that** said layer thickness of said varnish layer (10) is between 10 and 300 µm, preferably between 40 and 150 µm, in the area of said sealing surfaces (12, 13).

13. The screw joint according to one of claims 8 to 12, **characterised in that** said layer thickness of said varnish layer (10) is between 50 and 500 µm, preferably between 150 and 300 µm, in the area of said shoulder surfaces (14, 15).

14. The screw joint according to one of claims 1 to 13, **characterised in that** said organic polymer of said binding agent of said varnish layer is a polymer that hardens through cross-linking.

15. The screw joint according to one of claims 1 to 14, **characterised in that** said varnish layer (10) consists of a baking varnish with a synthetic resin binding agent or comprises a two-component system of a synthetic resin and a curing agent as a binding agent.

16. The screw joint according to claim 15, **characterised in that** said synthetic resin is an alkyd resin, preferably an alkyd resin modified with epoxy resin.

17. The screw joint according to one of claims 1 to 16, **characterised in that** said solid lubricant particles are polymer-based and particularly consist of a synthetic wax, preferably polyolefin, polyamide or fluoropolymer, particularly polypropylene wax.

18. The screw joint according to one of claims 1 to 17, **characterised in that** the percentage of said solid lubricant particles in said varnish layer (10) is 1 to 50% w/w, preferably 1 to 20% w/w, more preferably 1 to 10% w/w, particularly preferably 5% w/w.

19. The screw joint according to one of claims 1 to 18, **characterised in that** said thickness of said coating of said first contact surfaces that cooperate with each other is less than 120 µm, preferably less than 70 µm.

20. The screw joint according to one of claims 8 to 19, **characterised in that** said thickness of said coating of said second contact surfaces that cooperate with each other is less than 340 µm, preferably less than 180 µm, in the area of said sealing surfaces (12, 13).

21. The screw joint according to one of claims 8 to 20, **characterised in that** said thickness of said coating of said second contact surfaces that cooperate with each other is less than 540 µm, preferably less than 330 µm, in the area of said shoulder surfaces (14, 15).

22. The screw joint according to one of claims 1 to 21, **characterised in that** said first and said second layer made of ceramic material are formed together as conversion layer, preferably generated by means of phosphate conversion coating.

23. The screw joint according to one of claims 1 to 22, **characterised in that** said lubricant particles consist of non-crystalline fluorinated hydrocarbons and/or non-high polymer, if applicable derivatised, hydrocarbons or silicones.

24. A method for surface treatment of threads of a threaded connection of tubular elements comprising the application of a coating onto said first contact surfaces that cooperate with each other of a female thread and a male thread of said threaded connection and preferably the application of a coating onto second contact surfaces that cooperate with each other of said tubular elements adjacent to said female and/or male thread, wherein the coating comprises the application of at least a first layer and the application of a second layer on said first layer, wherein a conversion layer is applied onto said contact surface as a first layer in each case, **characterised in that** a layer (11) made of ceramic material with a friction reducing effect is applied as a second layer onto one of said first and, if applicable, second contact surfaces that cooperate with each other and a varnish layer (10) with a binding agent made of an organic polymer, throughout which solid lubricant particles are distributed, is applied as a second layer to the other of the two contact surfaces that cooperate with each other.

25. The method according to claim 24, **characterised in that** said layer (11) made of ceramic material is applied to said contact surface of the female thread (7) as second layer and said varnish layer (10) is applied to said contact surface of the male thread (6) as second layer.

26. The method according to claim 24 or 25, **characterised in that** said ceramic layer (11) is applied with a layer thickness of less than 1 µm, preferably less than 200 nm, particularly between 10 and 100 nm.

27. The method according to claim 24, 25 or 26, **characterised in that** said ceramic layer (11) is produced by means of wet chemical precipitation of nanoparticles, preferably SiO₂ nanoparticles of a solution.

28. The method according to claim 27, **characterised in that** said tubular element (2) is immersed with its thread (7) into a bath of said solution with primarily perpendicular pipe axis, wherein the level of said bath is preferably increased by means of arranging a displacement body in the inside of said tubular element.

29. The method according to claim 27, **characterised in that** said tubular element (2) is immersed with a circumferential portion into a bath of said solution with primarily horizontal pipe axis and is rotated on said pipe axis.

30. The method according to one of claims 24 to 29, **characterised in that** said varnish layer (10) is applied with a layer thickness of between 5 and 80 µm, preferably between 10 and 40 µm, in the area of the first contact surfaces.

31. The method according to one of claims 24 to 30, **characterised in that** said varnish layer (10) is applied by means of spraying.

## Revendications

1. Raccordement vissé comprenant un élément tubulaire muni d'un filetage interne et un élément tubulaire muni d'un filetage externe, dans lequel le filetage externe et le filetage interne présentent des premières surfaces de contact coopérantes, et les éléments tubulaires présentent des secondes surfaces de contact préférentiellement adjacentes au filetage interne ou externe, dans lequel les premières surfaces de contact et éventuellement les secondes surfaces de contact sont munies respectivement d'un revêtement comprenant au moins une première et une seconde couche, dans lequel la première couche est formée respectivement en tant que couche de conversion, **caractérisé en ce que** l'une parmi les premières et éventuellement secondes surfaces de contact coopérantes supporte en tant que seconde couche une couche (11) en matériau céramique à effet réducteur de friction et l'autre parmi les surfaces de contact coopérantes supporte en tant que seconde couche une couche de vernis (10) avec un liant constitué d'un polymère organique dans lequel sont réparties des particules de lubrifiant solides.

2. Raccordement vissé selon la revendication 1, **caractérisé en ce que** la seconde couche en matériau céramique (11) est formée au niveau de l'élément tubulaire (2) muni du filetage interne (7) et la seconde couche mise en oeuvre en tant que couche de vernis (10) est formée au niveau de l'élément tubulaire (1) muni du filetage externe (6).

3. Raccordement vissé selon la revendication 1 ou 2, **caractérisé en ce que** l'épaisseur de couche de la couche céramique (11) est inférieure à 1 µm, préférentiellement inférieure à 200 nm, en particulier comprise entre 10 et 100 nm.

4. Raccordement vissé selon la revendication 1, 2 ou 3, **caractérisé en ce que** la couche céramique (11) contient une résine, par ex. une aminorésine ou un agent hydrofuge, et est préférentiellement imprégnée de celle-ci, afin d'augmenter la résistance à la corrosion.

5. Raccordement vissé selon l'une quelconque des revendications 1 à 4, **caractérisé en ce que** la couche céramique (11) comprend des oxydes de titane, de zirconium, de niobium, de tantale, de molybdène, de chrome, de silicium, de vanadium, de tungstène, de germanium et/ou des mélanges de ceux-ci.

6. Raccordement vissé selon l'une quelconque des revendications 1 à 5, **caractérisé en ce que** la couche céramique (11) est constituée d'un précipité auto-précipitant par voie humide ou d'un prépolymère céramique appliqué à la façon d'un vernis avec des fractions organiques.

7. Raccordement vissé selon l'une quelconque des revendications 1 à 6, **caractérisé en ce que** la première couche (8, 9) est formée en tant que couche de phosphate, dans lequel elle est préférentiellement constituée de phosphate de manganèse, de phosphate de fer et/ou de phosphate de zinc avec addition de sels de nickel quelconques, de manière particulièrement préférée constituée de phosphate de manganèse et de phosphate de zinc et le plus préférentiellement constituée de phosphate de manganèse.

8. Raccordement vissé selon l'une quelconque des revendications 1 à 7, **caractérisé en ce que** les secondes surfaces de contact comprennent des surfaces d'étanchéité (12, 13) coopérantes ainsi que des surfaces d'épaulement (14, 15) coopérantes afin de réaliser un siège d'étanchéité, dans lequel les surfaces d'étanchéité (12, 13) sont préférentiellement formées de manière conique et sont préférentiellement agencées à la suite du filetage interne ou externe (7, 6) dans le sens du vissage.

9. Raccordement vissé selon l'une quelconque des revendications 1 à 8, **caractérisé en ce que** l'épaisseur de couche de la couche de vernis (10) dans la région des premières surfaces de contact est comprise entre 5 et 80 µm, préférentiellement entre 10 et 40 µm.

10. Raccordement vissé selon l'une quelconque des revendications 1 à 9, **caractérisé en ce que** l'épaisseur de couche de la couche de vernis (10) dans la région des secondes surfaces de contact est comprise entre 10 et 500 µm, préférentiellement entre 40 et 300 µm.

11. Raccordement vissé selon l'une quelconque des revendications 1 à 10, **caractérisé en ce que** l'épaisseur de couche de la couche de vernis (10) est choisie comme étant plus faible dans la région des premières surfaces de contact que dans la région des secondes surfaces de contact.

12. Raccordement vissé selon l'une quelconque des revendications 8 à 11, **caractérisé en ce que** l'épaisseur de couche de la couche de vernis (10) dans la région des surfaces d'étanchéité (12, 13) est comprise entre 10 et 300 µm, préférentiellement entre 40 et 150 µm.

13. Raccordement vissé selon l'une quelconque des revendications 8 à 12, **caractérisé en ce que** l'épaisseur de couche de la couche de vernis (10) dans la région des surfaces d'épaulement (14, 15) est comprise entre 50 et 500 µm, préférentiellement entre 150 et 300 µm.

14. Raccordement vissé selon l'une quelconque des revendications 1 à 13, **caractérisé en ce que** le polymère organique du liant de la couche de vernis est un polymère durcissant réticulant.

15. Raccordement vissé selon l'une quelconque des revendications 1 à 14, **caractérisé en ce que** la couche de vernis (10) est constituée d'un émail au four avec un liant à base de résine synthétique ou comprend en tant que liant un système à deux composants constitué d'une résine synthétique et d'un durcisseur.

16. Raccordement vissé selon la revendication 15, **caractérisé en ce que** la résine synthétique est une résine alkyde, en particulier une résine alkyde modifiée grâce à une résine époxy.

17. Raccordement vissé selon l'une quelconque des revendications 1 à 16, **caractérisé en ce que** les particules solides de lubrifiant sont à base de polymère, en particulier sont constituées d'une cire synthétique, en particulier d'un polymère à base de polyoléfine, ou d'un polymère à base de polyamide ou d'un fluoropolymère, en particulier d'une cire à base de polypropylène.

18. Raccordement vissé selon l'une quelconque des revendications 1 à 17, **caractérisé en ce que** la proportion des particules de lubrifiant solides dans la couche de vernis (10) est comprise entre 1 et 50 % en poids, de manière préférée entre 1 et 20 % en poids, en particulier entre 1 et 10 % en poids, et en particulier de 5 % en poids.

19. Raccordement vissé selon l'une quelconque des revendications 1 à 18, **caractérisé en ce que** l'épaisseur du revêtement des premières surfaces de contact coopérantes est inférieure à 120 µm, en particulier inférieure à 70 µm.

20. Raccordement vissé selon l'une quelconque des revendications 8 à 19, **caractérisé en ce que** l'épaisseur du revêtement des secondes surfaces de contact coopérantes dans la région des surfaces d'étanchéité (12, 13) est inférieure à 340 µm, en particulier inférieure à 180 µm.

21. Raccordement vissé selon l'une quelconque des revendications 8 à 20, **caractérisé en ce que** l'épaisseur du revêtement des secondes surfaces de contact coopérantes dans la région des surfaces d'épaulement (14, 15) est inférieure à 540 µm, en particulier inférieure à 330 µm.

22. Raccordement vissé selon l'une quelconque des revendications 1 à 21, **caractérisé en ce que** les première et seconde couches de matériau céramique sont formées ensemble en tant que couche de conversion, et sont préférentiellement produites par phosphatage.

23. Raccordement vissé selon l'une quelconque des revendications 1 à 22, **caractérisé en ce que** les particules de lubrifiant sont constituées d'hydrocarbures fluorés non cristallins ou de polymères non hauts, éventuellement d'hydrocarbures ou de silicones dérivatisés.

24. Procédé de traitement de surface de filetages d'un raccordement fileté d'éléments tubulaires, comprenant l'application d'un revêtement sur les premières surfaces de contact coopérantes d'un filetage interne et d'un filetage externe du raccordement fileté, et préférentiellement l'application d'un revêtement sur les secondes surfaces de contact coopérantes, adjacentes au filetage interne ou externe, des éléments tubulaires, dans lequel le revêtement comprend l'application d'au moins une première couche et l'application d'une seconde couche sur la première couche, dans lequel respectivement une couche de conversion est appliquée sur la surface de contact en tant que première couche, **caractérisé en ce qu'**une couche (11) en un matériau céramique à effet réducteur de friction est appliquée en tant que seconde couche sur l'une parmi les premières et éventuellement secondes surfaces de contact coopérantes et une couche de vernis (10) avec un liant constitué d'un polymère organique au sein duquel sont réparties des particules de lubrifiant solides est appliquée en tant que seconde couche sur l'autre parmi les surfaces de contact coopérantes.

25. Procédé selon la revendication 24, **caractérisé en ce que** la couche (11) en matériau céramique est appliquée en tant que seconde couche sur la surface de contact du filetage interne (7) et la couche de vernis (10) est appliquée en tant que seconde couche sur la surface de contact du filetage externe (6).

26. Procédé selon la revendication 24 ou 25, **caractérisé en ce que** la couche céramique (11) est déposée avec une épaisseur de couche inférieure à 1 µm, préférentiellement inférieure à 200 nm, en particulier comprise entre 10 et 100 nm.

27. Procédé selon la revendication 24, 25 ou 26, **caractérisé en ce que** la couche céramique (11) est produite à partir d'une solution par précipitation chimique par voie humide de nanoparticules, en particulier de nanoparticules de SiO₂.

28. Procédé selon la revendication 27, **caractérisé en ce que** le filetage (7) de l'élément tubulaire (2) est immergé dans un bain de la solution avec un axe de tube essentiellement vertical, dans lequel préférentiellement le niveau du bain est augmenté par agencement d'un corps de refoulement à l'intérieur de l'élément tubulaire.

29. Procédé selon la revendication 27, **caractérisé en ce qu'**une partie circonférentielle de l'élément tubulaire (2) est immergée dans un bain de la solution avec un axe de tube essentiellement horizontal et mis en rotation autour de l'axe de tube.

30. Procédé selon l'une quelconque des revendications 24 à 29, **caractérisé en ce que** la couche de vernis (10) est déposée dans la région des premières surfaces de contact avec une épaisseur de couche comprise entre 5 et 80 µm, préférentiellement comprise entre 10 et 40 µm.

31. Procédé selon l'une quelconque des revendications 24 à 30, **caractérisé en ce que** la couche de vernis (10) est appliquée par pulvérisation.
